(19) Europäisches Patentamt
European Patent Office
Office européen des brevets

(11) **EP 2 721 349 B1**

(12) **FASCICULE DE BREVET EUROPEEN**

(45) Date de publication et mention de la délivrance du brevet:
**11.09.2024 Bulletin 2024/37**

(21) Numéro de dépôt: **12738488.1**

(22) Date de dépôt: **14.06.2012**

(51) Classification Internationale des Brevets (IPC):
**F24C 7/08** *(2006.01)*   **H03K 17/94** *(2006.01)*
**H05B 6/12** *(2006.01)*   **H05B 3/74** *(2006.01)*
**G09F 9/33** *(2006.01)*   **F24C 15/10** *(2006.01)*
**C03C 17/00** *(2006.01)*   **G09F 23/00** *(2006.01)*

(52) Classification Coopérative des Brevets (CPC):
**C03C 17/002; C03C 17/007; F24C 7/083;
F24C 15/10; G09F 9/33; G09F 23/0058;**
C03C 2217/485

(86) Numéro de dépôt international:
**PCT/FR2012/051333**

(87) Numéro de publication internationale:
**WO 2012/172257 (20.12.2012 Gazette 2012/51)**

(54) **ARTICLE VITROCERAMIQUE A AFFICHAGE LUMINEUX COLORE**

GLASKERAMISCHER ARTIKEL MIT LEUCHTENDER FARBANZEIGE

GLASS-CERAMIC ARTICLE COMPRISING A LUMINOUS COLOUR DISPLAY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2011 FR 1155204**

(43) Date de publication de la demande:
**23.04.2014 Bulletin 2014/17**

(73) Titulaire: **Eurokera S.N.C.**
**02400 Château-Thierry (FR)**

(72) Inventeurs:
• **GUISET, Pierrick**
**F-91300 Massy (FR)**
• **LALUET, Jean-Yves**
**F-75019 Paris (FR)**
• **MALLET, Claire**
**75010 Paris (FR)**
• **VILATO, Pablo**
**F-75014 Paris (FR)**

(74) Mandataire: **Saint-Gobain Recherche
Département Propriété Industrielle
39 Quai Lucien Lefranc
93300 Aubervilliers (FR)**

(56) Documents cités:
EP-A1- 2 048 781    DE-A1- 10 309 225
DE-A1- 102008 012 602    DE-U1- 202010 014 361
JP-A- 2005 093 209    US-A1- 2005 252 754
US-A1- 2007 108 184

EP 2 721 349 B1

**Description**

La présente invention concerne le domaine des vitrocéramiques. Plus précisément, elle concerne un article (ou produit) en vitrocéramique, notamment une plaque vitrocéramique, destiné(e) en particulier à couvrir ou recevoir des éléments de chauffage, ledit article étant pourvu d'un affichage lumineux coloré (ou d'au moins une zone lumineuse colorée) en au moins une zone choisie de l'article.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants.

Les principales plaques actuelles sont de couleur sombre, en particulier noires, colorées par exemple en utilisant de l'oxyde de vanadium ajouté aux matières premières du verre-mère avant la fusion, cet oxyde conférant après céramisation une teinte orange-brune soutenue liée à une réduction du vanadium. D'autres colorants, tels que les oxydes de cobalt et de manganèse, peuvent également être utilisés. Avec un coefficient de transmission faible en dessous de 600nm, ces plaques permettent surtout la visibilité d'éléments rouges comme les éléments chauffants portés à haute température ou encore les affichages lumineux à base de diodes électroluminescentes monochromatiques de couleur rouge. Des plaques vitrocéramiques plus transparentes (telles que les vitrocéramiques KeraVision ou KeraResin, commercialisées par la société EuroKera), existent également, permettant l'affichage d'autres couleurs "pures" (produites par des diodes monochromatiques), telles que le bleu ou le vert.

Il est cependant apparu récemment un besoin de pouvoir visualiser une variété plus importante d'affichages avec des couleurs plus variées, faisant appel en particulier à des couleurs de synthèse produites par des mélanges à plusieurs longueurs d'onde (cas de la couleur blanche). Le coefficient de transmission des plaques vitrocéramiques n'étant pas uniforme sur l'ensemble du spectre visible, les amplitudes relatives des différentes composantes (spectrales) de la lumière transmise sont cependant généralement modifiées, la couleur après transmission pouvant dévier fortement de celle produite par la source.

En particulier, les technologies à base de diodes électroluminescentes (LEDs) habituellement employées pour produire une lumière blanche (par exemple avec une source de lumière bleue recouverte d'un phosphore absorbant une partie de ladite lumière et réémettant de la lumière jaune) ne peuvent pas être utilisées pour produire une couleur blanche à travers une vitrocéramique. Alors que la balance entre le bleu et le jaune est initialement telle que leur mélange donne une sensation visuelle de couleur blanche, du fait du passage dans la vitrocéramique, l'absorption n'étant pas homogène (bleu fortement absorbé, jaune moins), l'œil ne perçoit plus du blanc à travers la vitrocéramique, mais perçoit par exemple du rose, de l'orange ou du rouge.

De même, l'utilisation de LEDs à émissions polychromatiques (par exemple formées de trois sources monochromatiques d'intensités réglées de manière indépendante, telles que des LEDs de type « RGB » avec trois sources : rouge, verte et bleue) afin de donner par exemple du blanc, n'est pas appropriée, l'absorption inhomogène de la vitrocéramique sur le domaine visible déséquilibrant la balance entre les couleurs, et produisant également un rendu rose, orange ou rouge. On peut ajuster l'intensité respective des composantes RGB, mais le mélange doit être parfait (notamment spatialement - bon recouvrement des faisceaux lumineux - et temporellement - même phase d'une éventuelle modulation d'amplitude des faisceaux notamment) sous peine d'inhomogénéités ; l'espacement des trois zones émissives est souvent cause d'un mauvais mélange, entraînant une couleur non uniforme. De même, les 3 puces R, G et B subissent des dérives thermiques et des vieillissements différents, laissant apparaître dans le temps des inhomogénéités colorimétriques. Selon les lots de fabrication des LEDs rouge, verte et bleue, on observe en outre des variations de couleur d'une LED RGB à une autre. Les LEDs RGB sont également plus volumineuses que les LEDs habituellement utilisées pour les afficheurs et s'intègrent plus difficilement sur un bandeau de commande.

US 2007/0108184 décrit une plaque vitrocéramique sous laquelle est disposé un tube d'affichage fluorescent. Un filtre peut également être disposé sous la plaque, afin d'obtenir une transmission spectrale à environ 700 nm, c'est-à-dire dans les rouges, supérieure à la transmission spectrale à environ 500 nm, c'est-à-dire dans les verts ou dans les bleus.

Pour ces raisons, l'affichage en blanc ou pour une majorité de couleurs autres que rouge, en particulier pour des couleurs de synthèse, est absent des vitrocéramiques, notamment sombres ou colorées, du fait de leur absorption inhomogène sur le domaine du visible, une lumière non monochromatique les traversant voyant sa couleur modifiée, ceci étant d'autant plus critique que son spectre est large, comme pour les sources blanches.

Le but de la présente invention a donc été de fournir de nouveaux articles vitrocéramiques (tels que des plaques) améliorés, en particulier de mettre au point de nouveaux articles vitrocéramiques présentant un affichage lumineux coloré plus varié, notamment autre que rouge, et en particulier blanc, cet affichage ne présentant pas les inconvénients précédemment cités, offrant une large gamme de couleurs précises, et s'appliquant en particulier et avantageusement aux plaques de couleur sombre et/ou très absorbantes et/ou elles mêmes colorées.

Ce but est atteint par le nouvel article selon l'invention définie par la revendication 1, présentant au moins une zone lumineuse (en particulier d'affichage) colorée (au sens large incluant également le blanc), ledit article comprenant au moins un substrat vitrocéramique (en particulier une plaque, destinée par exemple à couvrir ou recevoir au moins un élément chauffant) ayant une transmission lumineuse allant de 0,8% à 40% et une transmission optique d'au moins 0,1 % pour au moins une longueur d'onde comprise dans le domaine allant de 420 à 780 nm (situé dans le domaine du visible), au moins une source lumineuse (et/ou un afficheur intégrant ladite source) et au moins un filtre (couplé (en fonctionnement) à ladite source (de même qu'à la plaque, la zone colorée obtenue résultant notamment de (l'action/l'effet de) ces trois composants)), de façon à former, en particulier, au moins une zone lumineuse, notamment un affichage (visualisation de données/ signalisation ou motifs décoratifs par exemple), colorée en au moins une zone de la plaque. Comme explicité ultérieurement, ce filtre peut être notamment combiné (en termes de positionnement) à la source et/ou à la plaque.

Par "filtre" on entend un filtre optique (à action sur la transmission de la lumière), en particulier coloré (l'action sur la transmission de la longueur d'onde se faisant en fonction des longueurs d'onde), ce filtre étant en particulier un élément (corps, substrat, matériau), généralement plan, notamment sous forme de film ou couche ou composite, à base d'au moins un matériau organique ou minéral, (semi-transparent (dans le sens notamment où il est transparent à certaine(s) longueur(s) d'onde du visible et non transparent à/en bloquant/en affectant d'autre(s), ce filtre présentant en outre généralement une transmission lumineuse d'au moins 5%, notamment d'au moins 20%, et en particulier d'au moins 30%), en particulier permettant d'absorber et/ou de réfléchir et/ou de réémettre certaines longueurs d'onde du spectre visible. De façon particulièrement avantageuse, le filtre est un filtre par absorption (l'action sur la transmission de la lumière se faisant par absorption à certaines longueurs d'onde, la lumière absorbée pouvant notamment être convertie en chaleur et/ou émise à d'autres longueurs d'onde). Selon un autre mode de réalisation, ce filtre est un filtre par réflexion (l'action sur la transmission de la lumière se faisant par réflexion à certaines longueurs d'onde). Le filtre peut être rapporté (fabriqué séparément), et combiné notamment à la source lumineuse (ou à plusieurs sources lumineuses) et/ou au substrat vitrocéramique, ou il peut être intégré ou réalisé directement sur le substrat vitrocéramique et/ou éventuellement sur au moins une source lumineuse et/ou un élément intermédiaire, comme explicité ultérieurement. Au moins une source lumineuse est couplée (en fonctionnement) à au moins un tel filtre correctif (c'est-à-dire que son rayonnement émis passe par ledit filtre) afin de produire l'affichage recherché au travers du substrat vitrocéramique auquel cet ensemble est combiné.

Le filtre précité est choisi en fonction de (ou est propre à, ou dépend de) la vitrocéramique (en l'occurrence de la transmission optique - ou transmission spectrale ou dispersion spectrale - du substrat vitrocéramique, la transmission optique/spectrale dépendant elle-même de la composition et de l'épaisseur dudit substrat) et éventuellement de la source lumineuse, comme explicité ultérieurement, de façon à former au moins une zone lumineuse colorée de coordonnées colorimétriques fixées, en particulier une zone colorée autre que rouge, et notamment une zone colorée de couleur blanche ou d'une couleur de synthèse obtenue par un mélange à plusieurs longueurs d'onde.

Par articles (en) vitrocéramiques, on entend non seulement les articles réalisés en vitrocéramique proprement dite mais également les articles en tout autre matériau analogue convenant pour les mêmes applications (par exemple un verre renforcé ou non), en particulier résistant à haute température et/ou présentant notamment un coefficient de dilatation nul ou quasi-nul (par exemple inférieur à $15.10^{-7}$ $K^{-1}$, comme dans le cas des plaques vitrocéramiques utilisées avec des feux radiants). De préférence cependant, il s'agit d'un article en vitrocéramique proprement dite.

L'article selon l'invention peut être avantageusement une plaque de cuisson, mais peut être également tout autre article en vitrocéramique présentant un affichage fonctionnel ou décoratif, voire un article ou module ou ensemble ou système (à vocation principale) d'affichage (décoratif et/ou fonctionnel) avec au moins une source lumineuse couplée à au moins un filtre correctif, cet ensemble étant couplé à au moins une vitrocéramique, en particulier plaque, conformément à l'invention.

De préférence, l'article selon l'invention est formé (comme substrat) d'une plaque vitrocéramique (d'épaisseur généralement comprise entre 3 et 4 mm, notamment de l'ordre de 4 mm), plane, ou majoritairement ou quasiment plane (en particulier avec une flèche inférieure à 0,1% de la diagonale de la plaque, et de préférence de l'ordre de zéro), et est destiné à servir de plaque de cuisson. Une telle plaque est généralement destinée à être intégrée dans une table de cuisson ou cuisinière comprenant ladite plaque et des éléments chauffants, par exemple des foyers radiants ou halogènes ou des éléments de chauffage par induction.

La plaque présente généralement une face "supérieure" (face visible) en position d'utilisation, une autre face "inférieure" (souvent cachée, dans le châssis ou caisson d'une cuisinière par exemple) en position d'utilisation, et une tranche (ou chant ou épaisseur). La face supérieure est généralement plane et lisse mais peut aussi présenter au moins une zone en relief et/ou au moins une zone en creux et/ou au moins une ouverture (par exemple si la plaque incorpore une ouverture destinée à recevoir un brûleur à gaz atmosphérique). La face inférieure peut être notamment lisse ou munie de picots augmentant sa résistance mécanique et obtenus par exemple par laminage. Le cas échéant, dans le cas de picots, une résine d'indice peut être appliquée sur la surface inférieure afin de la lisser, si nécessaire en cas d'ajout de filtre sur cette face.

L'article selon l'invention est avantageusement à base de toute vitrocéramique ayant, de manière intrinsèque, une transmission lumineuse allant de 0,8% à 40% (en particulier de 2,3 à 40%) et une transmission optique (déterminée de façon connue en faisant le rapport entre l'intensité transmise et l'intensité incidente à une longueur d'onde donnée) d'au moins 0,1% pour au moins une longueur d'onde, comprise dans le domaine du visible, au dessus de 420 nm (et jusqu'à 780 nm), et de préférence d'au moins 0.1 % pour toutes les longueurs d'onde comprises dans le domaine allant de 420 à 780 nm. Par « de manière intrinsèque», on entend que la plaque possède une telle transmission en elle-même, sans la présence d'un quelconque revêtement. La transmission lumineuse est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003. L'invention s'applique de façon particulièrement avantageuse aux plaques sombres, notamment d'aspect noir ou brun, présentant de tels critères de transmission, mais la vitrocéramique utilisée présentant de tels critères peut également être une vitrocéramique claire, la solution selon l'invention permettant d'obtenir l'affichage lumineux de la couleur précise désirée, avec une grande souplesse d'adaptation, pour toute cette gamme de plaques, de façon simple et sans risquer d'altérer d'autres propriétés des plaques.

Dans un premier mode de réalisation, la vitrocéramique est une vitrocéramique, en particulier sombre (notamment telle que la valeur de L* dans le système colorimétrique CIE, calculée à partir du spectre de transmission de ladite vitrocéramique sur le domaine du visible, soit inférieure à 70%), présentant une transmission lumineuse dans le visible de 0,8% à 5%, en particulier de 0,8 à 2,5%, et présentant une transmission optique supérieure à 0,1% pour au moins une longueur d'onde dans le domaine du visible supérieure à 450 nm.

Dans un autre mode de réalisation avantageux, la vitrocéramique, du type aluminosilicate de lithium, présente (de manière intrinsèque) une transmission lumineuse allant de 2,3% à 40%, en particulier supérieure à 2.5%, notamment supérieure à 3.5%, et une transmission optique d'au moins 0,6% pour au moins une longueur d'onde comprise dans le domaine allant de 420 à 480 nm. Dans ce cas, que la vitrocéramique soit claire ou sombre, elle présente de préférence au moins un moyen de masquage destiné à masquer au moins une partie des éléments sous-jacents associés (moyens de chauffage notamment) le cas échéant à l'exclusion des dispositifs émetteurs de lumière/des zones d'éclairage et le cas échéant de moyens de chauffage par rayonnement, le(s) filtre(s) étant dans ce cas essentiellement utilisé(s) dans les zones lumineuses non masquées.

En particulier, on utilise avantageusement une vitrocéramique comprenant les constituants suivants et/ou obtenue par céramisation à partir d'un verre de composition suivante, dans les limites ci-après exprimées en pourcentages pondéraux : $SiO_2$: 52 - 75 %; $Al_2O_3$ :18 - 27 %; $Li_2O$: 2,5 - 5,5 %; $K_2O$ : 0 - 3 %; $Na_2O$ : 0 - 3 %; $ZnO$ : 0 - 3,5 %; $MgO$ : 0 - 3 %; $CaO$: 0 - 2,5%; $BaO$ : 0 - 3,5 %; $SrO$ : 0 - 2 %; $TiO_2$ :1,2 - 5,5 %; $ZrO_2$ : 0 - 3 %; $P_2O_5$: 0 - 8 %, et de préférence, dans les limites ci-après exprimées en pourcentages pondéraux : $SiO_2$ :64 - 70 %; $Al_2O_3$ : 18 - 21 %; $Li_2O$ : 2,5 - 3,9 %; $K_2O$ : 0 - 1,0 %; $Na_2O$ : 0 - 1,0 %; $ZnO$ : 1,2 - 2,8 %; $MgO$ : 0,20 - 1,5 %; $CaO$ : 0 - 1 %; $BaO$: 0 - 3 %; $SrO$: 0 - 1,4 %; $TiO_2$ : 1,8 - 3,2 %; $ZrO_2$ : 1,0 - 2,5 %.

La vitrocéramique peut aussi comprendre jusqu'à 1 % en poids de constituants non essentiels n'affectant pas la fusion du verre-mère ou la dévitrification ultérieure conduisant à la vitrocéramique. Des colorants peuvent notamment être ajoutés à la composition dans le cas par exemple des vitrocéramiques noires ou brunes. Par exemple, la composition de la plaque peut comprendre avantageusement de l'oxyde de vanadium à un taux compris entre 0,01 % et 0,2%, de préférence inférieur ou égal à 0,05%, voire à 0,04%. Les teneurs préférées en oxyde de vanadium sont comprises entre 0,01 et 0,03%.

La vitrocéramique peut aussi contenir, pour cacher les éléments chauffants et éventuellement en combinaison avec l'oxyde de vanadium, les autres agents colorants suivants (limites pondérales) : $Fe_2O_3$ : 0 - 0,2 %; $CoO$ : 0 - 1 %, et de préférence 0 - 0,12 %, voire du $NiO$, du $CuO$ et/ou du $MnO$. La vitrocéramique peut aussi comprendre de l'oxyde d'étain (ou d'autres réducteurs comme les sulfures métalliques) à un taux compris inférieur à 0,5%, l'oxyde d'étain permettant de favoriser la réduction du vanadium pendant l'étape de céramisation, entraînant notamment l'apparition de la couleur.

La vitrocéramique sombre préférée selon l'invention comprend généralement des cristaux de structure β-quartz au sein d'une phase vitreuse résiduelle, et la valeur absolue de son coefficient de dilatation est avantageusement inférieure ou égale à $15.10^{-7}$/°C, voire à $5.10^{-7}$/°C.

Par la sélection de vitrocéramiques, qui bien que sombres le cas échéant, présentent des transmissions lumineuse et optique sélectionnées décrites ci-avant, et leur combinaison à des filtres sélectionnés suivants les besoins comme évoqué précédemment, afin de compenser ou corriger, de façon contrôlée, la dispersion spectrale de la vitrocéramique, on peut obtenir le rendu souhaité des couleurs, quel que soit le spectre initial de la source lumineuse regardée à travers ladite vitrocéramique, sans être limité par le choix des sources lumineuses ni contraint à des transformations complexes de celles-ci ou de la vitrocéramique. Le filtre, choisi en fonction de la vitrocéramique et éventuellement de la source (selon l'objectif recherché comme explicité ultérieurement, en particulier dans le cas où l'on veut corriger le flux lumineux émis), permet d'obtenir la transmission souhaitée de l'ensemble filtre/vitrocéramique (avec correction de couleur ou obtention d'une transmission neutre, c'est-à-dire sans altération de la couleur initiale de la source). L'invention convient aux plaques vitrocéramiques sombres ou colorées remplissant les critères de transmission, qu'elle dote d'une fonction de coloration contrôlée de l'affichage. Elle permet d'atteindre, pour une source de couleur donnée, une couleur cible donnée, et notamment de réaliser des affichages/afficheurs résultants de couleur identique ou non à la couleur initiale, notamment des afficheurs résultants blancs ou de couleurs inédites pour vitrocéramiques. L'invention permet également de produire des zones de colorations variées sur une vitrocéramique en associant, par exemple des colorations particulières à des espaces ou des fonctions.

Comme défini précédemment, l'article selon l'invention comprend également au moins une source lumineuse, pouvant être continue ou discontinue, et le cas échéant comprend plusieurs sources (leur nombre et leur disposition pouvant varier pour homogénéiser l'éclairage). La ou les sources peuvent être intégrées dans/couplées à une ou des structure(s) de type afficheur(s) (par exemple à diodes électroluminescentes dits « à 7 segments » ou à cristaux liquides), à un bandeau de commande électronique à touches sensitives et affichage digital, etc. Les sources lumineuses sont de préférence formées par des diodes électroluminescentes (ou DEL ou LED en anglais), plus ou moins espacées, éventuellement associées à un ou plusieurs guides optiques comme mentionné ultérieurement. Les diodes sont avantageuses dans la présente invention en terme notamment d'encombrement, d'efficacité, de pérennité et de résistance aux conditions environnantes (chaleur...).

Les diodes peuvent être encapsulées, c'est-à-dire comprendre un composant semi-conducteur et une enveloppe (par exemple en résine type époxy ou nylon), encapsulant le composant semi-conducteur. Les diodes peuvent aussi être des puces semi-conductrices sans lentilles de collimation par exemple de taille de l'ordre de la centaine de μm ou du mm, éventuellement avec une encapsulation minime (par exemple de protection).

Les diodes peuvent être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

L'assemblage de la ou des sources (à la plaque ou à un autre constituant de l'article comme par exemple le bandeau de commande) peut se faire par soudure, clipsage, collage, etc, le cas échéant par l'intermédiaire d'un autre élément ; par exemple, on peut monter des diodes, soudées sur un support lui même logé au fond d'un profilé métallique, par clipsage ou collage du profilé. Le positionnement de la ou des sources (par rapport à la plaque notamment) est adapté pour permettre un affichage au travers de la vitrocéramique.

Les sources, ainsi que leur alimentation et actionnement, peuvent être dissociés ou non de façon à permettre un éclairage simultané ou séparé des zones d'éclairage voulues selon les besoins. Chaque source peut être monochromatique (couleur pure), dans le cas notamment où plusieurs sources monochromatiques sont combinées (par exemple LED RGB) pour émettre un spectre polychromatique (couleur de synthèse), ou peut être polychromatique. L'invention permet avantageusement de corriger l'absorption inhomogène du spectre polychromatique de la ou des sources à travers la vitrocéramique (par exemple pour une LED blanche), et s'applique particulièrement aux articles utilisant des sources à émissions polychromatiques (seules ou en combinaison).

Par « source lumineuse monochromatique » on entend une source lumineuse présentant un seul pic d'émission dans la gamme des longueurs d'onde visibles et tel que la largeur du pic varie de 1 à 100 nm, préférentiellement de 5 à 50 nm.

Par « source lumineuse polychromatique » on entend une source lumineuse qui présente au moins deux pics d'émission à des longueurs d'onde différentes dans la gamme des longueurs d'onde visibles. La couleur perçue (par la rétine) est alors issue d'un mélange entre les différentes longueurs d'ondes. Il peut s'agir d'une LED, et/ou d'un afficheur à LED(s), avec un spectre d'émission présentant un pic d'émission principal et un autre pic d'émission, par exemple de fluorescence, plus large que le pic principal, et généralement de plus faible intensité. La LED polychromatique émet en particulier selon une première émission (de forte ou de faible intensité) comprise entre 400 et 500 nm et selon une deuxième émission dans le visible au-delà de 500 nm (de forte ou de faible intensité) (cas par exemple de LEDs formées d'au moins un cristal électroluminescent et de phosphore(s) photoluminescent(s)).

On peut notamment utiliser comme sources des LEDs blanches fabriquées par exemple à partir d'une puce de cristal semi-conducteur tel que le nitrure de gallium/indium (InGaN) émettant dans le bleu recouverte d'une résine transparente (telle que silicone ou époxy) contenant des luminophores minéraux (par exemple YAG:Ce), absorbant le bleu et émettant dans le jaune. Comme autres exemples de LEDs polychromatiques avantageuses, on peut citer notamment les LEDs ou afficheurs suivants : la gamme XLamp® LED ou « High Brightness LED » de la société CREE, la gamme NichiaHelios, NichiaRigel, « Lamp type LED », NSSM, NSSW, NSEW, NS9 et NS2 de la société Nichia, la série des « TOPLED® » blanches et les références LW Q38E, LW L283 et LW Q38G de la société OSRAM, la gamme « Luxeon® Rebel White » et « Luxeon® K2 » de la société Philips Lumileds, les LEDs de références E1S19, E1S27, E1S62, E1S66, E1S67, E1SAG, E1SAP, EASAA, EASAU, EASAV, E1L4x et E1L5x de la société Toyoda Gosei, les LEDS de références HSMW-C120, HSMW-C130, HSMW-C191, HSMW-C197 et HSMW-C265 de la société Avago Technologie, les LEDs de références LTW-C193TS5 et LTW-C191TS5 de la société LITE-ON, les LEDs de références WH104L-H, WH104-NZ et WH107 de la société Seoul Semiconductor, la LED de référence 19-213/T1D-KS1T1B2/3T de la société Everlight, etc.

On peut également citer les afficheurs à LED(s) suivants : afficheurs 7 segments blancs de références HDSM-431W et HDSM-433W de la société Avago Technologies, ou de références FN1-0391WO10JBW et FN1-0391WO50JBW de la société FORGE EUROPA, afficheurs matriciels « Dot Matrix® » de la société KingBright Ex. : Réf. TA20-11YWA; afficheurs à barres « Bar Graph Array® » de la société KingBright, par exemple de référence DC10YWA. A noter que les afficheurs à LED(s) sont des dispositifs d'affichage lumineux dont la source lumineuse « primaire » est constituée de LED(s), ces dispositifs étant généralement composés de « segments » lumineux (par exemple afficheurs à 7 segments), de points (afficheurs matriciels) ou de barres, un segment étant généralement formé par un réflecteur, la ou les LEDs étant généralement insérée(s) à une extrémité du réflecteur et la lumière guidée jusqu'à l'autre l'extrémité (apparente), les parois internes du réflecteur pouvant être diffusantes et/ou l'extrémité apparente du segment pouvant être recouverte d'un matériau plastique de transparence élevée.

Comme déjà évoqué, l'article peut comprendre, outre la ou les sources, au moins un guide d'onde destiné à propager la lumière d'une partie à l'autre de l'article (en particulier par réflexion totale interne ou par réflexion métallique), la source lumineuse étant alors rattachée au guide et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent, et est généralement rapporté (assemblé après avoir été conçu séparément) sur la face inférieure du substrat. Il peut être organique et/ou plastique (par exemple en polycarbonate ou polyméthacrylate de méthyle PMMA), ou minéral, et est de préférence minéral ; en particulier, il s'agit d'un verre. L'article selon l'invention peut comprendre plusieurs guides dédiés chacun à une ou plusieurs zones d'éclairage, ou un guide unitaire, pourvu le cas échéant d'ouvertures. Le guide peut être solidarisé au substrat par collage et/ou clipsage, ou par encapsulation, etc. L'assemblage du guide peut se faire directement sur le substrat ou sur une autre partie de l'article ou d'un support sur lequel est monté l'article, par exemple dans le cas d'un module ou appareil de cuisson, le guide peut être solidarisé au caisson de l'appareil de cuisson sur lequel le substrat est monté (le caisson pouvant le cas échéant faire partie de l'article). Le guide permet, entre autres, de mieux conduire la lumière jusqu'aux zones d'éclairage voulues, en particulier lorsque le substrat est de couleur sombre.

L'article selon l'invention peut aussi comprendre dans la zone d'éclairage, au moins un moyen d'extraction du rayonnement émis par la ou les sources, par exemple un ou des éléments ou traitement(s) diffusants, en particulier un moyen d'extraction tel qu'une couche rapportée sur la surface et/ou par tout traitement ou texturation différentielle de la surface (local ou sur toute la surface), le cas échéant du guide d'onde, comme la gravure laser, l'impression d'émail, l'attaque chimique (acide..) ou mécanique (sablage...), etc. Une surface d'extraction peut également être prévue, par exemple dans l'épaisseur du guide le cas échéant, suivant par exemple une technologie de gravure interne par laser. Le ou les moyens d'extraction permettent d'extraire les rayonnements du guide vers la zone d'éclairage voulue. Le cas échéant, la géométrie et la rugosité du bord d'un guide d'onde peuvent également être travaillés pour permettre une extraction locale et contrôlée de la lumière. Le ou les moyens d'extraction peuvent être combinés le cas échéant avec un autre traitement permettant de cibler les zones d'éclairage, par exemple avec une sérigraphie occultante (masquant certaines zones et empêchant le passage de la lumière) sur le substrat.

Comme défini selon l'invention, l'article revendiqué comprend également au moins un filtre, ce filtre étant généralement placé (et occupant en particulier une position fixe) entre la source et le substrat et pouvant être solidarisé (c'est-à-dire directement, ou indirectement (par exemple par l'intermédiaire d'un autre constituant) fixé, et inamovible de façon simple une fois placé) à la source et/ou au substrat, et/ou éventuellement à un autre élément intermédiaire (par exemple un moyen d'extraction de la lumière tel que précité), comme explicité ultérieurement. De préférence, il est solidaire de (ou fixé sur) la vitrocéramique.

Il est possible d'utiliser différents types de filtres (de constitution et de mode d'opération différents), lesquels agissent sur ou compensent de façon choisie, maitrisée et reproductible la transmission lumineuse au travers de la plaque (ils présentent à cet effet une dispersion spectrale différente de celle de la vitrocéramique). Ces filtres peuvent être des polymères transparents colorés, des verres colorés, la coloration se faisant par dépôt ou dans la masse, ou peuvent être des couches déposées sur les sources ou les vitrocéramiques, etc. comme explicité ci-après.

Comme mentionné précédemment, on utilise de préférence un ou des filtres par absorption (cette absorption étant en particulier contrôlée par des composés organiques ou inorganiques ajoutés le cas échéant à une matrice en verre ou en plastique). Ce type de filtre peut par exemple être formé par dépôt d'un ou plusieurs colorants ou pigments minéraux ou organiques (éventuellement dissous ou dispersés dans un medium, en particulier tel qu'une résine de type silicone, époxy ou acrylique, une encre à séchage UV, ou une matrice minérale de type sol-gel) à la surface d'un substrat transparent. Le substrat peut être un matériau verrier (verre sodocalcique, verre borosilicate, ou il peut s'agir du substrat vitrocéramique même) ou plastique/polymère (feuille de polymère type polyéthylène téréphtalate, en particulier thermostabilisé, polycarbonate, acrylate, polyétheréthercétone (PEEK), etc.), des exemples de ces filtres étant notamment les gélatines ou filtres polymères colorés commercialisés par les sociétés Lee Filters ou Rosco. De préférence, le substrat est la plaque vitrocéramique même. Le dépôt peut être réalisé par sérigraphie, par impression jet d'encre ou laser, par spray, par trempage, par application au rouleau, etc, et est de préférence réalisé par sérigraphie ou impression jet d'encre, en particulier sur la plaque et/ou la source (et/ou éventuellement un élément intermédiaire), notamment et avantageusement par jet d'encre.

A noter que les substances colorées, en particulier colorants ou pigments, utilisées pour réaliser les filtres précités résistent de préférence à la chaleur. Par exemple on peut utiliser avantageusement des pigments de phtalocyanine de cuivre polychlorés ou non, utilisés en mélange et dispersés dans une résine notamment de type polysiloxane réticulable, le mélange étant par exemple (et avantageusement) appliqué (en particulier par sérigraphie) en face inférieure de la vitrocéramique. Dans le cas de l'impression jet d'encre (notamment directement sur le substrat vitrocéramique), les encres utilisées peuvent être notamment des encres à séchage UV, stables en température et à la lumière, comme par exemple les encres de référence Anapurna M commercialisées par la société Agfa.

Le filtre par absorption peut alternativement ou simultanément être formé par un matériau teinté dans sa masse. Ce matériau peut être verrier (notamment le produit "SGG Stadip Color" commercialisé par Saint Gobain Glass France), ou plastique (tel qu'une résine de type silicone ou époxy, ou un polymère de type PET, PC ou acrylate). On peut citer par exemple les filtres optiques en verre de la gamme « Schott Optical Glass Filter » commercialisés par Schott.

Le filtre par absorption permet avantageusement d'obtenir l'effet ou la couleur choisi(e) quel que soit l'angle d'incidence de l'observation.

Dans un autre mode de réalisation, on utilise un ou des filtres agissant par réflexion lumineuse (Cette réflexion étant en particulier contrôlée par des interférences se produisant au sein d'un empilement de couches minces constituées de différents matériaux, une couche mince étant une couche dont l'épaisseur est inférieure à la longueur d'onde de la lumière), notamment des filtres de type dichroïques, à base d'empilements (de couches) interférentiels semi-réfléchissants, etc. De tels filtres sont réalisés par exemple par dépôt (sous vide) physique en phase vapeur (PVD) (pulvérisation, pulvérisation assistée magnétron, évaporation) ou chimique en phase vapeur (CVD) de couches de haut et de bas indices de réfraction en alternance, le substrat sur lequel le dépôt est effectué pouvant être un matériau verrier ou un polymère. Un exemple de filtre dichroïque est par exemple celui commercialisé sous la référence C04 par la société Lee Filters, constitué d'un empilement dichroïque (à deux angles d'incidence différents) déposé sur un substrat verrier, et donnant un rendu blanc en incidence normale lorsqu'il est associé à un afficheur sept segments blanc de référence Avago HDSM.441W précité et à la vitrocéramique KeraVision précitée d'épaisseur 4 mm, en étant inséré entre l'afficheur et la vitrocéramique.

Le filtre par réflexion permet d'obtenir l'effet ou la couleur choisi(e) en incidence normale (incidence perpendiculaire à la plaque, c'est à dire quand on regarde la plaque bien en face), la perception pouvant cependant le cas échéant être différente à une autre incidence.

Le choix du filtre ou de la combinaison de filtres spécifiquement approprié(s) à chaque cas, pour obtenir la couleur cible recherchée (telle que perçue visuellement) et/ou l'effet compensateur recherché (cas par exemple de la recherche d'une transmission neutre au travers de l'article sans altération de la couleur de la source, quelle que soit la source), est fonction de la plaque vitrocéramique utilisée, de la couleur recherchée (et de la source utilisée dans ce cas là) ou de l'effet voulu (cas de la transmission neutre quelle que soit la source), et du type de filtre utilisé.

Si l'on souhaite compenser parfaitement la transmission de la vitrocéramique afin que l'ensemble vitrocéramique/filtre n'altère pas la couleur de la source (transmission neutre, constante ou approximativement constante, par exemple à une variation de 0.5 % près, sur le domaine de transmission considéré), le filtre recherché dépend en premier lieu de la vitrocéramique et doit fonctionner quelle que soit la source lumineuse utilisée. Il est alors qualifié d'universel et est capable de corriger la dispersion colorimétrique introduite par une vitrocéramique (en particulier sous forme de plaque dans la présente invention) de composition et d'épaisseur données. Le filtre universel est sélectionné de façon à ce que la transmission optique (intensité lumineuse transmise sur intensité lumineuse incidente/émise par la source) $T_T$ ($\lambda$) (pour chaque longueur d'onde $\lambda$ considérée, ladite transmission étant mesurée en incidence normale, ou à un angle d'incidence plus approprié en fonction des conditions d'utilisation choisies) totale au travers de l'ensemble filtre + vitrocéramique soit (égale à une) constante dans tout le domaine spectral considéré (ou pour toute(s) longueur(s) d'onde considérée(s)). Pour se faire, on détermine le minimum de transmission (optique) $T_{Vmin}$ de ladite vitrocéramique dans le domaine spectral considéré, et on cherche un filtre permettant d'obtenir une valeur de $T_T(\lambda)$ constante égale à $T_{Vmin}$ quelle que soit la longueur d'onde du domaine spectral considéré, à une différence $T_T(\lambda)$ - $T_{Vmin}$ près n'excédant pas de préférence 0,1, et de façon particulièrement préférée 0,01 (en d'autres termes, on minimise $T_T(\lambda)$ - $T_{Vmin}$).

Généralement, le domaine spectral considéré est le domaine spectral du visible (toutes longueurs d'onde comprise entre 380 nm et 780 nm, notamment entre 420 et 780 nm), le minimum de transmission $T_{Vmin}$ se trouvant généralement à 380 nm. Le filtre universel choisi permet de conserver la couleur de la source, quelle que soit cette source (la transmission $T_T(\lambda)$ est la même pour toutes les longueurs d'onde du visible), seule l'intensité étant altérée (intensité obtenue pour $T_{Vmin}$).

En accord avec l'invention le domaine spectral est beaucoup plus réduit entre 420 et 600 nm, autorisant une certaine dispersion colorimétrique (ou écart entre la couleur perçue et la couleur de la source), mais maximisant le flux visuel final perçu, en particulier on peut choisir de limiter au domaine spectral où l'œil humain est le plus sensible au rayonnement électromagnétique reçu. Par exemple, dans la mesure où l'efficacité lumineuse spectrale $V(\lambda)$ (définie par la Commission Internationale de l'Eclairage), permettant d'exprimer le flux lumineux perçu par l'œil humain, atteint sa valeur maximum 1 pour une longueur d'onde de 555 nm, la valeur de $T_{Vmin}$ considérée peut être celle mesurée à 555 nm environ, ou bien, à titre d'autre exemple en-dehors de la présente invention, dans la mesure où $V(\lambda)$ est supérieur à 0,5 de 510 nm à 610 nm (en vision photopique, c'est-à-dire vision de jour), la valeur de $T_{Vmin}$ considérée peut être celle sur le domaine spectral compris entre 510 nm et 610 nm.

A partir de $T_{Vmin}$, on peut donc déduire la transmission $T_F(\lambda)$ du filtre recherché, $T_T(\lambda)$ dépendant de la transmission du filtre $T_F(\lambda)$ et de celle de la vitrocéramique $T_V(\lambda)$ dans des rapports fonctions notamment du type de filtre et de la position de celui-ci par rapport à la vitrocéramique (dans le cas le plus simple, en négligeant notamment les réflexions aux interfaces, on a, en première approximation $T_T(\lambda) = T_F(\lambda) \times T_V(\lambda)$, avec $|T_T(\lambda)$ - $T_{Vmin}| \leq 0,1$ par exemple). Le filtre est ensuite choisi par combinaison le cas échéant de filtres existants ou par réalisation d'un filtre approprié, de façon empirique par essais successifs pour arriver au (spectre de transmission) $T_F(\lambda)$ voulu, ou par optimisation numérique/algorithme, etc, les variables (du filtre) intervenant sur la transmission (par exemple concentration de pigments, type de pigments, épaisseur du filtre, dans le cas par exemple d'un filtre par absorption obtenu à partir de pigments, ou nombre de couches, indice de chaque matériau, épaisseur du filtre, dans le cas d'un filtre dichroïque, etc.), ces variables dépendant du filtre choisi, étant ajustées lors de cette optimisation.

Dans un autre mode de réalisation ou une variante en-dehors de la présenté invention, lorsque la source lumineuse est fixée (le filtre étant alors fonction le cas échéant de la vitrocéramique et de la source) et que l'on cherche à retrouver la couleur initiale de la source, ou une couleur proche, après transmission au travers de l'ensemble vitrocéramique/filtre, le domaine spectral considéré (dans lequel on détermine en particulier $T_{Vmin}$) est le domaine d'émission de la source. Alternativement, de la même façon que précédemment, on peut autoriser une certaine dispersion colorimétrique de façon à maximiser le flux visuel final perçu, en choisissant par exemple le ou les (intervalles de) longueurs d'onde dans le domaine d'émission de la source telles que le produit $F_e(\lambda) \times V(\lambda)$, normalisé à 1 (c'est-à-dire que pour chaque longueur d'onde, on divise $F_e(\lambda) \times V(\lambda)$ par la valeur maximale de $F_e(\lambda) \times V(\lambda)$ sur le domaine d'émission de la source, toutes les valeurs de $F_e(\lambda) \times V(\lambda)$ normalisé à 1 étant alors comprises entre 0 et 1), où $F_e(\lambda)$ désigne pour une bande de longueur d'onde donnée la densité spectrale de flux énergétique de la source, est supérieur à 0,1.

Dans un troisième mode de réalisation en-dehors de la présente invention, lorsque la source lumineuse est fixée, le filtre peut être déterminé de façon à obtenir une couleur cible différente de la couleur initiale de la source après transmission au travers de l'ensemble vitrocéramique/filtre. Dans ce cas, on ne se base pas sur la valeur de $T_{Vmin}$ utilisée précédemment, mais, à la place, on détermine, selon le modèle CIE 1931, les coordonnées colorimétriques $(x_c, y_c)$ de la couleur cible souhaitée et on cherche un filtre permettant d'obtenir des coordonnées colorimétriques $(x,y)$ associées au flux énergétique $T_T(\lambda) \times F_e(\lambda)$ émis par l'ensemble source/filtre/vitrocéramique telles que la valeur $d = ((x - x_c)^2 + (y - y_c)^2)^{1/2}$ soit minimisée, en particulier inférieure ou égal à 0,05, préférentiellement à 0,01 et encore plus préférentiellement à 0,005. Le cas échéant, plusieurs filtres pouvant être identifiés dû au phénomène de métamérisme (sensation visuelle de couleur identique sous un même éclairage), on peut affiner encore la sélection en choisissant notamment la solution/le filtre qui donne le flux lumineux final le plus grand (par exemple maximisant $K \times \int T_T(\lambda) \times F_e(\lambda) \times V(\lambda) \, d\lambda$ pour des valeurs de $\lambda$ entre 380 et 780 nm, K étant une constante égale à 683 lm/W en vision photopique (flux lumineux perçu par l'œil pour une source lumineuse de 1 W émettant à 555 nm).

A partir des coordonnées colorimétriques $(x, y)$ ainsi déterminées, on peut déduire là encore la transmission $T_F(\lambda)$ du filtre recherché, les formules de calcul étant encore une fois fonction notamment du type de filtre et de la position de celui-ci par rapport à la vitrocéramique, le filtre étant choisi parmi les filtres existants ou réalisation de filtre(s), en combinant le cas échéant plusieurs filtres, le choix se faisant comme précédemment de façon empirique par essais successifs pour arriver au critère/spectre de transmission $T_F(\lambda)$ voulu, ou par optimisation numérique/algorithme, etc, les variables (du filtre) intervenant sur la transmission, ces variables dépendant du filtre choisi, étant ajustées lors de cette optimisation.

Des exemples de sélections de filtres ou d'ajustements desdites variables pour sélectionner les filtres sont donnés ultérieurement. Dans le cas préféré de l'utilisation de filtres par absorption, lorsque ces filtres sont formés par dépôt d'un mélange de pigments dispersés dans un médium, et si l'on dispose de $N$ espèces absorbantes (pigments et medium) que l'on mélange puis qu'on applique sous la plaque vitrocéramique, on peut identifier la composition optimale de ce mélange coloré en fonction du but recherché (transmission neutre, couleur conservée ou différente de la couleur initiale de la source), à partir de la loi de Beer-Lambert permettant de prévoir l'absorbance $A$ du mélange de $N$ espèces absorbantes :

$$A(\lambda) = \sum_{i=1}^{N} \varepsilon_i(\lambda) l C_i$$

où $\varepsilon_i$ est l'absorptivité molaire de chaque espèce, $l$ la longueur du trajet optique dans le mélange, et $C_i$ la concentration molaire de chaque espèce. On modélise alors $T_T(\lambda, C_1, ..., C_N)$, transmission de l'ensemble {mélange de composition variable + vitrocéramique}. Suivant le mode choisi (réalisation d'un filtre universel, ou réalisation d'un filtre pour une vitrocéramique et une source données, avec une couleur cible identique ou non à celle de la source), on peut alors chercher à optimiser $(C_1, ..., C_N)$ de façon à ce que $|T_T(\lambda) - T_{Vmin}| \leq 0,1$, ou calculer les coordonnées colorimétriques $(x(C_1, ..., C_N), y(C_1, ..., C_N))$ associées au flux $T_T(\lambda, C_1, ..., C_N)F_e(\lambda)$ transmis puis optimiser $(C_1, ..., C_N)$ de façon à ce que d $= ((x - x_c)^2 + (y - y_c)^2)^{1/2} \leq 0,05$, comme explicité précédemment.

L'invention concerne également un procédé de sélection (et/ou réglage) d'au moins un filtre pour la réalisation de (plaque(s)) vitrocéramique(s) présentant au moins une zone lumineuse, en particulier une zone d'affichage, colorée tel qu'explicité ci-avant en fonction du but recherché.

Comme déjà évoqué, chaque filtre peut être rapporté, ou intégré éventuellement à un constituant de l'article, et est positionné (couplé) par rapport à la plaque et à la source correspondante de façon à corriger la transmission lumineuse au travers de la vitrocéramique. Par exemple, le filtre peut être rapporté/déposé/fixé sur la vitrocéramique, notamment par collage, dépôt (d'une couche faisant office de filtre) par impression laser ou jet d'encre, par sérigraphie, par spray, etc., préférentiellement sur la face inférieure de la vitrocéramique. Le filtre peut aussi être fixé entre la source/l'afficheur et la vitrocéramique, ou éventuellement monté sur la source/l'afficheur (par dépôt, collage, encapsulation, capuchonnage, etc). Dans le cas particulier de la combinaison d'au moins une source lumineuse à au moins un guide d'onde, le filtre peut être inséré entre la source lumineuse et la surface d'injection de la lumière du guide d'onde, ou être rapporté sur la surface inférieure de la plaque vitrocéramique, dans les zones d'éclairage. On n'utilise généralement qu'un seul type (par absorption, par réflexion, etc.) de filtre par vitrocéramique mais on peut éventuellement utiliser conjointement plusieurs types de filtres. On peut en outre élaborer chaque filtre selon chaque cas d'espèce en fonction du but recherché, comme évoqué dans les méthodes de sélection précédentes et illustré plus spécifiquement dans les exemples, notamment quand les filtres sont obtenus par dépôt d'une ou plusieurs couches, par exemple sur la vitrocéramique, ou à partir d'un filtre existant que l'on adapte au besoin (en changeant par exemple l'épaisseur), et/ou on peut sélectionner des filtres ou combinaisons de filtres appropriés du commerce utilisés dans d'autres domaines.

La combinaison source/filtre/vitrocéramique permet d'obtenir un affichage blanc ou coloré au travers de la vitrocéramique, ce qui donne accès à des effets lumineux particulièrement recherchés en termes de design. L'article selon l'invention peut ainsi présenter une ou plusieurs zones lumineuses/d'affichage à usage fonctionnel et/ou décoratif (dessin, logo, signalisation alphanumérique, etc), généralement observées en faces principales (notamment la face supérieure) du substrat vitrocéramique. La ou lesdites zones peuvent être dans toute zone de la plaque (y compris zones de chauffe), et l'on peut avoir plusieurs zones lumineuses/d'affichage différenciées (couleur, niveau de luminance), et/ou chaque zone peut elle même présenter différentes couleurs, par exemple une zone peut être bicolore.

L'article selon l'invention peut comporter le cas échéant d'autres éléments et/ou couches que les constituants précités. Par exemple, lorsqu'il s'agit d'un module de cuisson, l'article peut être muni de (ou associée avec des) élément(s) fonctionnel(s) ou de décor supplémentaire(s) (cadre, connecteur(s), câble(s), élément(s) de commande), etc. Il peut comporter divers revêtements fonctionnels et/ou décoratifs, à base d'émail, de peinture, etc. Par exemple, l'une des faces du substrat peut comporter une couche d'émail de décoration, de masquage (pour éviter par exemple la vision directe des sources), ou d'autre fonction (homogénéisation de l'éclairage, etc.).

L'invention concerne aussi les appareils (ou dispositifs) de cuisson et/ou de maintien à haute température comportant au moins un article selon l'invention (par exemple cuisinières, tables de cuisson encastrables, fours, etc) et comportant, le cas échéant, un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction. L'article selon l'invention peut également consister en un appareil de cuisson comportant un ou plusieurs éléments chauffants outre les éléments précités dans la définition de l'invention. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction). En outre, l'invention n'est pas limitée à la fabrication de plaques ou modules de cuisson pour cuisinières ou tables de cuisson. Les articles fabriqués conformément à l'invention peuvent également être d'autres modules plans ou plaques devant présenter une grande insensibilité aux variations de température.

L'appareil de cuisson, outre les éléments internes de chauffage, comprend aussi généralement des moyens de commande et/ou de contrôle, les éléments internes étant recouverts par le substrat vitrocéramique, l'affichage autre que rouge étant vu au travers dudit substrat, pourvu le cas échéant, en une face ou en son sein d'au moins un moyen de masquage destiné à masquer au moins une partie desdits éléments internes.

La présente invention concerne également un procédé de fabrication d'un article selon l'invention, dans lequel on insère entre la plaque vitrocéramique et au moins une source, au moins un filtre tel que mentionné précédemment selon l'invention, en particulier choisi selon le procédé de sélection précédemment évoqué. Ce filtre peut être inséré sous forme d'un élément indépendant (par exemple on rapporte le filtre, en particulier on l'assemble au substrat vitrocéramique ou à la source) ou d'une couche déposée sur la source ou le substrat vitrocéramique comme précédemment évoqué. On insère avantageusement ce filtre après céramisation du verre précurseur (ou verre-mère ou green glass) pour obtenir le substrat vitrocéramique.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

L'invention concerne également l'utilisation d'au moins un filtre (dans un dispositif lumineux intégré dans un article vitrocéramique) pour obtenir un article présentant au moins une zone lumineuse, en particulier d'affichage, colorée.

D'autres détails et caractéristiques avantageuses ressortiront ci-après de la description de modes de réalisation non limitatifs de l'invention en référence aux dessins annexés dans lesquels :

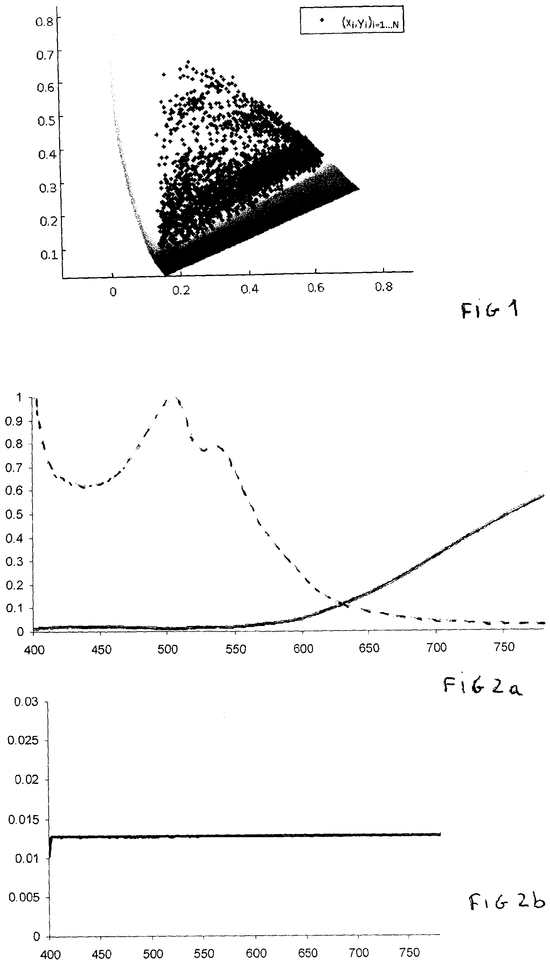

- La figure 1 représente l'affichage sur le diagramme colorimétrique CIE 1931 de tous les points $(x_i, y_i)_{i=1...N}$ accessibles par l'utilisation de combinaisons de 2 filtres colorés fixés en face inférieure d'une vitrocéramique placée sur une source lumineuse, afin de sélectionner la combinaison de filtres permettant d'obtenir la couleur cible par transmission de la lumière émise au travers de l'ensemble combinaison de filtres + plaque vitrocéramique.
- La figure 2a représente, pour un autre mode de réalisation de l'invention (utilisation d'un filtre universel) les spectres respectifs de transmission optique d'une plaque vitrocéramique et du filtre universel choisi propre à cette vitrocéramique, et la figure 2b représente la transmission optique de la combinaison des deux.

Exemple 1

Dans le mode de réalisation de l'article associé à la figure 1, l'article en question est un module de cuisson plan comprenant une plaque vitrocéramique (substrat), commercialisée sous la référence KeraVision par la société Eurokera, cette plaque présentant une face supérieure lisse et une face inférieure lisse (cette face pouvant également être munie de picots) et une épaisseur de 4 mm, l'article comprenant en outre un afficheur (source lumineuse) à LEDs blanc (afficheur 7 segments) commercialisé sous la référence HDSM-431W par la société AVAGO Technologies, et comprenant également une combinaison de deux filtres choisis dans la gamme des filtres commercialisés par la société LEE FILTERS (tels que les filtres colorés pour éclairage de référence LEE FILTERS 131 et 103) ou par la société Rosco, la source lumineuse étant fixée sous la plaque, et les filtres, rapportés sous la plaque vitrocéramique, se trouvant entre la source et la plaque. En fonctionnement, la source émet un faisceau lumineux qui traverse l'ensemble filtres/plaque au niveau de la zone d'affichage. La distance entre la source et la plaque est inférieure ou égale à 5 mm, elle peut notamment être inférieure à 2 mm, voire 1 mm.

Le choix des filtres est effectué de la façon suivante : on souhaite obtenir, à travers la plaque un affichage de couleur blanc chaud (de coordonnées colorimétriques cibles $x_c$ = 0,35, $y_c$ = 0,34) à partir de l'afficheur blanc dont les coordonnées colorimétriques initiales ont également été mesurées ($x_0$ = 0,33 $\pm$ 0,01, $y_0$ = 0,33 $\pm$ 0,01). On dispose de deux catalogues de filtres par absorption, colorés, produits par les sociétés Lee Filters et Rosco, ces filtres se présentant sous forme de films polymère (type PET) colorés. On cherche à déterminer quel(s) filtre(s) insérer entre l'afficheur et la plaque vitrocéramique pour obtenir la couleur cible.

On mesure la densité de flux énergétique $F_e(\lambda)$ de la source ainsi que la transmission optique spectrale des filtres et de la vitrocéramique (les mesures de transmission, sur la plaque vitrocéramique dont la face texturée (picots) a été supprimée le cas échéant par polissage, sont effectuées à l'aide d'une sphère intégrante, par exemple le modèle SPH-12-X de la société SphereOptics, couplée à un spectromètre, par exemple le modèle CAS140 de la société Instrument Systems). On évalue en particulier $(T_T(\lambda))_{i=1\ldots N}$ pour les $N$ combinaisons envisagées d'un ou de plusieurs filtres colorés Lee Filters ou Rosco avec la plaque vitrocéramique, puis on calcule les coordonnées colorimétriques $(x_i, y_i)_{i=1\ldots N}$ correspondantes aux flux transmis $(T_T(\lambda)F_e(\lambda))_{i=1\ldots N}$, et on place dans le diagramme de chromaticité CIE 1931 tous ces points $(x_i, y_i)_{i=1\ldots N}$ (figure 1). On retient les combinaisons de filtres permettant d'obtenir des coordonnées colorimétriques $(x, y)$ associées au flux énergétique $T_T(\lambda) \times F_e(\lambda)$ émis par l'ensemble source/filtres/vitrocéramique telles que la valeur $d = ((x - x_c)^2 + (y - y_c)^2)^{1/2}$ soit minimisée, en particulier inférieure ou égal à 0,05, préférentiellement à 0,01 et encore plus préférentiellement à 0,005.

On constate qu'avec l'utilisation d'un seul filtre catalogue on ne minimise pas d dans les limites fixées. En revanche, on constate que l'utilisation d'une combinaison de 2 filtres LEE FILTERS, en l'occurrence les filtres 103 et 131, avec la plaque vitrocéramique et l'afficheur donnés, permet d'obtenir la couleur cible souhaitée. La figure donne également l'ensemble des couleurs (cibles) synthétisables avec une sélection de filtres du catalogue Lee Filters à partir de l'afficheur blanc donné.

Exemple 2:

On représente (en figure 2a, avec en ordonnée la transmission (optique), c'est-à-dire le rapport de l'intensité lumineuse transmise sur l'intensité du faisceau incident, en fonction de la longueur d'onde en nanomètre du faisceau incident, en abscisse) le spectre de transmission (ou dispersion spectrale) de la plaque vitrocéramique de référence Kéravision précédente (courbe pleine) et celui du filtre universel (courbe en pointillés) propre à la vitrocéramique, sélectionné comme indiqué ci-après, ainsi que celui de la plaque et du filtre combinés (figure 2b). Cette combinaison n'altère pas la colorimétrie d'une source, quel que soit son spectre, la transmission totale de l'ensemble vitrocéramique plus filtre étant approximativement constante ou plate.

Comme filtre universel, on recherche dans le présent exemple un filtre par réflexion, ce filtre étant constitué d'un empilement dichroïque déposé sur un substrat verrier, ce filtre donnant notamment un rendu blanc en incidence normale lorsqu'il est associé à un afficheur 7 segments blanc Avago HDSM.441W et à la vitrocéramique KeraVision précitée d'épaisseur 4 mm, en étant inséré entre l'afficheur et la vitrocéramique.

Pour concevoir un tel filtre en opérant la sélection appropriée des couches à haut et bas indices de réfraction déposées en alternance sur le substrat utilisé, on modélise par exemple $T_T(\lambda)$ en considérant un empilement multicouches interférentiel composé de couches de $TiO_2$ et de $SiO_2$ déposées alternativement sur la plaque de Keravision lisse-lisse précitée de 4 mm d'épaisseur. Le calcul des propriétés optiques de l'empilement ainsi réalisé est par exemple décrit dans « Macleod, H.A., Thin Film optical Filters. 3rd ed. 1986». Le nombre de couches ainsi que leur épaisseur est mis en variable, puis est optimisé jusqu'à minimiser $T_T(\lambda) - T_{Vmin}$, le minimum de transmission optique $T_{Vmin}$ de la vitrocéramique dans le domaine spectral considéré (ici 420-780 nm) ayant au préalable été déterminé (ce minimum de transmission optique étant à 420 nm et étant égal à 0,013 (1.3%)). Le tableau ci-dessous présente le résultat de cette optimisation, la couche 1 étant la première couche de l'empilement (adjacente au substrat vitrocéramique).

| couche | 1 | 2 | 3 | 4 | 5 | 6 | 7 | 8 | 9 | 10 |
|---|---|---|---|---|---|---|---|---|---|---|
| matériau | TIO2 | SIO2 | TIO2 | SIO2 | TIO2 | SIO2 | TIO2 | SIO2 | TIO2 | SIO2 |
| épaisseur (nm) | 88.17 | 128.92 | 90.03 | 108.87 | 64.83 | 104.83 | 96.14 | 76.05 | 89.25 | 104.61 |

Le spectre de transmission optique du filtre constitué de l'empilement à 10 couches obtenu par l'optimisation ci-dessus est représenté en pointillés en figure 2a, comme déjà évoqué, la figure 2.b illustrant le résultat obtenu (transmission $T_T$ en incidence normale de l'ensemble plaque + empilement de 10 couches de $TiO_2$ et $SiO_2$ présenté dans le tableau ci-dessus).

Ce filtre universel permet de conserver la couleur de la source, quelle que soit la source utilisée. Un filtre (à effet) proche de ce filtre précité dans les conditions d'utilisation précédemment définies, est également celui commercialisé sous la référence C04 par la société Lee Filters.

Exemple 3 :

Dans cette variante préférée des exemples précédents, on cherche à mettre au point un filtre par absorption universel propre à la plaque kéravision des exemples précédents, et approprié notamment pour obtenir un rendu blanc avec la plaque et l'afficheur mentionné dans l'exemple 1. Pour se faire, on procède par impression jet d'encre sur le substrat vitrocéramique. Les encres utilisées sont des encres à séchage UV, stables en température et à la lumière, comme par exemple les encres Anapurna M commercialisées par la société Agfa. Après avoir calculé la transmission du filtre universel adapté à la vitrocéramique KeraVison d'épaisseur 4 mm, on calcule les coordonnées colorimétrique L*, a*, b* de ce filtre dans le système colorimétrique CIEL*a*b*, puis on imprime ce filtre par impression jet d'encre sur la face inférieure de la vitrocéramique en entrant ces coordonnées L*, a*, b* dans le logiciel de gestion des couleurs de l'imprimante (par exemple une imprimante Anapurna M avec une configuration d'impression à au moins 4 passes) intégrant par exemple une base de données faisant correspondre aux coordonnées L*a*b* des combinaisons de couleurs de l'imprimante définies pour le substrat sélectionné (le filtre résultant d'un mélange entre les couleurs de l'imprimante).

Exemple 4 :

Dans cette variante de l'exemple précédent, on cherche également à mettre au point un filtre par absorption universel propre à la plaque kéravision des exemples précédents, et approprié notamment pour obtenir un rendu blanc avec la plaque et l'afficheur mentionné dans l'exemple 1, mais en sélectionnant cette fois des mélanges de pigments. Pour se faire, on utilise un mélange de pigment de phtalocyanine de cuivre alpha PB 15 :2 (par exemple la référence Heliogen Blue L 6875 F commercialisée par la société BASF) et de pigment de phtalocyanine de cuivre polychloré PG7 (par exemple la référence Heliogen_ Green L 8730 commercialisée par la société BASF), l'ensemble étant incorporé dans une résine silicone transparente (résine polysiloxane réticulable, avec des charges minérales de type silice). Par optimisation numérique (après avoir mesuré les spectres de transmission, pour une épaisseur déposée donnée, ici 25μ, qui représente la longueur du trajet optique, de chaque pigment incorporé seul dans la résine transparente silicone, à différentes concentrations, et le spectre de transmission de la résine transparente seule à une épaisseur de 25μ) selon la loi de Beer-Lambert, on calcule les proportions dans le mélange pour réaliser un filtre universel adapté à la vitrocéramique KeraVision d'épaisseur 4 mm. Le mélange pigment Heliogen Blue L6875F à 0,06% en masse + pigment Heliogen Green L8730 à 0,74% en masse + résine silicone transparente appliqué (de préférence par sérigraphie) en dépôt d'épaisseur 25 μm en face inférieure de la plaque permet, après cuisson pendant une heure à 250°C, d'obtenir un blanc (x=0,34, y=0,33) par transmission de la lumière émise par l'afficheur Avago HDSM 431W précité au travers de l'ensemble dépôt coloré /vitrocéramique.

Exemple 5:

Dans cet exemple où l'on souhaite conserver, à travers la plaque précitée la couleur de l'afficheur blanc AVAGO précité, on part d'un filtre coloré par absorption de référence Schott BG39 commercialisé par la société Schott (filtre utilisé en photographie notamment) d'épaisseur 3,04 mm qui, placé entre l'afficheur et la plaque vitrocéramique, « surcorrige » la dispersion colorimétrique introduite par la vitrocéramique, la couleur d'affichage de l'ensemble source + filtre + plaque vitrocéramique étant bleue.

On caractérise alors expérimentalement l'épaisseur et la transmission du filtre BG39 utilisé. La loi de Beer-Lambert nous permet de prévoir l'influence de l'épaisseur d du filtre sur la transmission interne Ti du milieu, selon

$$T_{i,d_1}(\lambda) = T_{i,d_2}(\lambda)^{d_1/d_2}$$

On modélise alors $T_T(\lambda,d)$, transmission de l'ensemble {filtre d'épaisseur $d$ variable + plaque vitrocéramique}, et on calcule les coordonnées colorimétriques (x($d$),y($d$)) associées au flux $T_T(\lambda,d)F_e(\lambda)$ transmis. Enfin, on identifie la valeur de $d$ qui permet de minimiser d = ((x(d)- $x_c$)$^2$ +(y(d) - $y_c$)$^2$)$^{1/2}$. On trouve ainsi qu'avec $d$ = (0.58 × épaisseur initiale) mm, c'est-à-dire d--1,76 mm, on retrouve la couleur initiale de l'afficheur (x = 0.33, y = 0.32).

Les articles, en particulier plaques, selon l'invention peuvent notamment être utilisées avec avantage pour réaliser une nouvelle gamme de plaques de cuisson pour cuisinières ou tables de cuisson, mais peuvent également être utilisés avec avantages pour réaliser des éléments de paroi ou des parois (par exemple des portes ou partie de portes) de fours, etc.

**Revendications**

1. Article présentant au moins une zone lumineuse colorée, ledit article comprenant au moins un substrat vitrocéramique ayant une transmission lumineuse allant de 0,8% à 40% et une transmission optique d'au moins 0,1 % pour au moins une longueur d'onde comprise dans le domaine allant de 420 à 780 nm, au moins une source lumineuse et au moins un filtre optique présentant une transmission lumineuse d'au moins 5% de façon à former au moins une zone lumineuse, colorée, en au moins une zone de l'article, la ou lesdites sources lumineuses étant uniquement une ou des diodes électroluminescentes et ledit filtre optique compensant la transmission lumineuse de la vitrocéramique, ledit filtre optique étant un filtre compensant la transmission de la vitrocéramique afin que l'ensemble vitrocéramique/filtre présente une transmission totale optique $T_T(\lambda)$ constante à une variation de 0,5 % près, sur un domaine de transmission considéré, ledit domaine de transmission s'étendant entre 420 et 600 nm.

2. Article selon la revendication 1, **caractérisé en ce que** le filtre est choisi en fonction de la vitrocéramique, ou de la vitrocéramique et de la source lumineuse, de façon à former au moins une zone lumineuse colorée de couleur blanche et/ou d'une couleur de synthèse obtenue par un mélange à plusieurs longueurs d'onde.

3. Article selon l'une des revendications 1 ou 2, **caractérisé en ce que** le filtre est un filtre optique et est solidaire de la source et/ou de la plaque.

4. Article selon l'une des revendications 1 à 3, **caractérisé en ce que** le filtre est un filtre par absorption.

5. Article selon l'une des revendications 1 à 3, **caractérisé en ce que** le filtre est un filtre par réflexion.

6. Article selon l'une des revendications 1 à 5, **caractérisé en ce que** le filtre est obtenu par impression jet d'encre.

7. Article selon l'une des revendications 1 à 6, **caractérisé en ce que** la zone lumineuse est une zone d'affichage.

8. Article selon l'une des revendications 1 à 7, ou dispositif de cuisson et/ou de maintien à haute température comportant un article selon l'une des revendications 1 à 7, et comportant un ou plusieurs éléments de chauffage.

9. Procédé de sélection d'au moins un filtre optique pour la réalisation d'un article selon l'une des revendications 1 à 8 présentant au moins une zone lumineuse colorée, selon lequel on cherche un filtre présentant une transmission lumineuse d'au moins 5% et permettant d'obtenir une valeur de transmission totale $T_T(\lambda)$ de l'ensemble vitrocéramique/filtre(s) constante à une variation de 0,5 % près, sur le domaine de transmission considéré et où le domaine de transmission considéré s'étend de 420 à 600 nm.

10. Procédé de fabrication d'un article selon l'une des revendications 1 à 8, dans lequel on insère entre la plaque vitrocéramique et au moins une source, au moins un filtre, en particulier selon le procédé de sélection de la revendication 9.

**Patentansprüche**

1. Artikel, der mindestens eine farbige Leuchtzone vorweist, der Artikel umfassend mindestens ein Glaskeramiksubstrat, das eine Lichtdurchlässigkeit von 0,8 % bis 40 % und eine optische Durchlässigkeit von mindestens 0,1 % für mindestens eine Wellenlänge in dem Bereich von 420 bis 780 nm besitzt, mindestens eine Lichtquelle und mindestens ein optisches Filter, das eine Lichtdurchlässigkeit von mindestens 5 % vorweist, um in mindestens einer Zone des Artikels mindestens eine farbige Leuchtzone auszubilden, wobei es sich bei der einen oder den mehreren Lichtquellen um nur eine oder mehrere Leuchtdioden handelt und wobei das optische Filter die Lichtdurchlässigkeit der Glaskeramik kompensiert, wobei das optische Filter ein Filter ist, das die Durchlässigkeit der Glaskeramik kompensiert, damit die Glaskeramik/Filter-Anordnung eine gesamte optische Durchlässigkeit $T_T(\lambda)$ über einen betrachteten Durchlässigkeitsbereich hinweg mit einer Abweichung von etwa 0,5 % konstant vorweist, wobei der Durchlässigkeitsbereich sich zwischen 420 und 600 nm erstreckt.

2. Artikel nach Anspruch 1, **dadurch gekennzeichnet, dass** das Filter in Abhängigkeit von der Glaskeramik oder der Glaskeramik und der Lichtquelle ausgewählt ist, um mindestens eine farbige Leuchtzone in weißer Farbe und/oder einer Synthesefarbe auszubilden, die durch eine Mischung bei mehreren Wellenlängen erhalten wird.

3. Artikel nach einem der Ansprüche 1 oder 2,
**dadurch gekennzeichnet, dass** das Filter ein optisches Filter ist und mit der Quelle und/oder der Platte fest verbunden ist.

**4.** Artikel nach einem der Ansprüche 1 bis 3,
**dadurch gekennzeichnet, dass** das Filter ein Filter durch Absorption ist.

**5.** Artikel nach einem der Ansprüche 1 bis 3,
**dadurch gekennzeichnet, dass** das Filter ein Filter durch Reflexion ist.

**6.** Artikel nach einem der Ansprüche 1 bis 5, **dadurch gekennzeichnet, dass** das Filter durch Tintenstrahldrucken erhalten wird.

**7.** Artikel nach einem der Ansprüche 1 bis 6,
**dadurch gekennzeichnet, dass** die Leuchtzone eine Anzeigezone ist.

**8.** Artikel nach einem der Ansprüche 1 bis 7 oder Vorrichtung zum Kochen und/oder Halten bei hoher Temperatur, aufweisend einen Artikel nach einem der Ansprüche 1 bis 7 und aufweisend ein oder mehrere Heizelemente.

**9.** Verfahren zum Auswählen mindestens eines optischen Filters für die Erstellung eines Artikels nach einem der Ansprüche 1 bis 8, der mindestens eine farbige Leuchtzone vorweist, gemäß der ein Filter gesucht wird, das eine Lichtdurchlässigkeit von mindestens 5 % vorweist und das Erhalten eines Werts der gesamten optischen Durchlässigkeit $T_T(\lambda)$ der Anordnung von Glaskeramik/Filter(n) ermöglicht, der über einen betrachteten Durchlässigkeitsbereich hinweg mit einer Abweichung von etwa 0,5 % konstant ist und wobei der betrachtete Durchlässigkeitsbereich sich von 420 bis 600 nm erstreckt.

**10.** Verfahren zum Herstellen eines Artikels nach einem der Ansprüche 1 bis 8, wobei zwischen der Glaskeramikplatte und mindestens einer Quelle mindestens ein Filter eingefügt wird, insbesondere nach dem Auswahlverfahren nach Anspruch 9.

## Claims

**1.** An article having at least one colored luminous zone, in particular a display zone, said article comprising at least one glass-ceramic substrate having a luminous transmission ranging from 0.8% to 40% and an optical transmission of at least 0.1% for at least one wavelength in the range extending from 420 to 780 nm, at least one light source and at least one filter having a luminous transmission of at least 5% so as to form at least one colored luminous zone in at least one zone of the plate, said light source being only one or several LED(s) and said filter being a filter that compensates the transmission of the glass-ceramic so that the glass-ceramic/filter assembly has a total optical transmission $T_T(\lambda)$ that is constant within a 0.5% variation across a specified transmission range, said transmission range extending between 420 and 600 nm.

**2.** The article as claimed in claim 1, **characterized in that** the filter is chosen depending on the glass-ceramic or on the glass-ceramic and the light source, so as to form at least one colored luminous zone having a white color and/or a synthetic color obtained by a mixing with several wavelengths.

**3.** The article as claimed in either of claims 1 and 2, **characterized in that** the filter is an optical filter and it is fastened to the source and/or the plate.

**4.** The article as claimed in one of claims 1 to 3, **characterized in that** the filter is an absorption filter.

**5.** The article as claimed in one of claims 1 to 3, **characterized in that** the filter is a reflection filter.

**6.** The article as claimed in one of claims 1 to 5, **characterized in that** the filter is obtained by ink-jet printing.

**7.** The article as claimed in one of claims 1 to 5, **characterized in that** the luminous zone is a display zone.

**8.** The article as claimed in one of claims 1 to 7, or a device for cooking and/or maintaining at a high temperature comprising an article according to one of claims 1 to 7, and comprising one or more heating elements.

**9.** A method for selecting at least one filter for producing an article according to one of claims 1 to 8 having at least one colored luminous zone according to which a filter having a luminous transmission of at least 5 % is sought allowing a constant total transmission value $T_T(\lambda)$ for the glass-ceramic/filter(s) assembly that is constant within a 0.5% variation across a specified transmission range, said transmission range extending between 420 and 600 nm.

10. A process for manufacturing an article according to one of claims 1 to 8, in which at least one filter, in particular a filter selected according to the selection method of claim 9, is inserted between the glass-ceramic plate and at least one source.

FIG 1

FIG 2a

FIG 2b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070108184 A

**Littérature non-brevet citée dans la description**

- **MACLEOD, H.A.** Thin Film optical Filters. 1986